## Europäisches Patentamt
## European Patent Office
## Office européen des brevets

(19)

(11) Veröffentlichungsnummer: **0 048 842**
**B1**

(12)

# EUROPÄISCHE PATENTSCHRIFT

(45) Veröffentlichungstag der Patentschrift:
**12.12.84**

(21) Anmeldenummer: **81106996.2**

(22) Anmeldetag: **07.09.81**

(51) Int. Cl.³: **C 08 F 214/06, C 08 F 2/20**

(54) Verfahren zur Herstellung von Vinylchlorid-Polymeren.

(30) Priorität: 25.09.80 DE 3036127
25.09.80 DE 3036101

(43) Veröffentlichungstag der Anmeldung:
**07.04.82 Patentblatt 82/14**

(45) Bekanntmachung des Hinweises auf die Patenterteilung:
**12.12.84 Patentblatt 84/50**

(84) Benannte Vertragsstaaten:
**BE DE FR GB IT NL SE**

(56) Entgegenhaltungen:
**DE - A - 2 227 887**
**FR - A - 1 530 343**

*Die Akte enthält technische Angaben, die nach dem
Eingang der Anmeldung eingereicht wurden und die
nicht in dieser Patentschrift enthalten sind.*

(73) Patentinhaber: **CHEMISCHE WERKE HÜLS AG,
Postfach 1320, D-4370 Marl 1 (DE)**

(72) Erfinder: **Sielfeld, Gilbert, Dr., Lipper Weg 197,
D-4370 Marl (DE)**
Erfinder: **Sunder-Plassmann, Paul, Dr., Langehegge 149,
D-4370 Marl (DE)**

**Beschreibung**

Zur Herstellung von Polyvinylchlorid nach dem Suspensionspolymerisationsverfahren wird das Monomere oder das Monomergemisch durch mechanisches Rühren in der wäßrigen Phase fein verteilt, mit Hilfe von Schutzkolloiden stabilisiert und in Anwesenheit von Radikalinitiatoren polymerisiert. Als Schutzkolloide oder Suspensionsstabilisatoren können wasserlösliche, natürliche polymere Stoffe, wie Stärke, Gelatine u. dgl., wasserlösliche Cellulosederivate wie Alkylcellulosen, Hydroxialkylcellulosen u. dgl., wasserlösliche synthetische Produkte wie teilverseifte Polyvinylacetate, Copolymere aus Maleinsäureanhydrid und Vinylacetat und auch verschiedene Kombinationen der genannten Stoffe eingesetzt werden.

Polyvinylchloridharze, die mit den genannten Suspensionsstabilisatoren hergestellt werden, sind für die Hartverarbeitung geeignet, führen aber bei der Weichverarbeitung wegen der unbefriedigenden Weichmacheraufnahme zu Fertigteilen mit einer großen Anzahl sogenannter Stippen oder Fischaugen. Ferner ist, bedingt durch die geringe Kornporosität, das Restmonomere nur aufwendig und schwierig zu entfernen. Um diesen Nachteilen zu begegnen, wurden bereits grenzflächenaktive Stoffe als porositätsverbessernde Mittel, wie zum Beispiel Sorbitanmonolaurat, zugesetzt (DE-OS 2 208 796). Nach diesem Verfahren hergestellte Polyvinylchloridharze besitzen jedoch noch eine unbefriedigend hohe Stippigkeit (Fischaugen), insbesondere, wenn das Polyvinylchloridharz mit hochviskosem Weichmacher verarbeitet wird. Außerdem weisen solche Produkte eine noch zu geringe Porosität für eine einfach durchführbare Vinylchloridentgasung auf. Darüber hinaus führt der Einsatz von Tensiden, wie das oben erwähnte Sorbitanmonolaurat, zu Produkten mit unbefriedigenden elektrischen Widerstandswerten.

Bei nach bekannten Verfahren hergestellten Suspensions-Polyvinylchloridharzen besteht eine Wechselwirkung zwischen der Porosität und dem Schüttgewicht, und zwar verursacht eine Erhöhung der Porosität zwecks guter Entmonomerisierung eine Herabsetzung des Schüttgewichts. Eine Herabsetzung des Schüttgewichts bedeutet jedoch eine Abnahme des Ausstoßes an extrudiertem Polyvinylchloridharz. Diese Nachteile werden überwunden durch ein Verfahren zur Herstellung von Vinylchloridharzen durch Polymerisation von Vinylchlorid allein oder zusammen mit bis zu 20 Gewichtsprozent an anderen polymerisierbaren ungesättigten Monomeren in wäßriger Suspension in Gegenwart von monomerlöslichen Radikalkatalysatoren, von teilhydrolysierten Polyvinylacetaten und/oder Celluloseethern als Suspensionsstabilisatoren, das dadurch gekennzeichnet ist, daß man in Gegenwart von 0,02 bis 0,3 Gewichtsprozent, bezogen auf das Monomere, eines Copolymeren, bestehend aus 75 bis 93 Mol-% 2-Isopropyl-$\Delta$2-oxazolin oder 2-n-Propyl-$\Delta$2-oxazolin und 25 bis 7 Mol-% 2-Ethyl-$\Delta$2-oxazolin, und/oder eines Copolymeren, bestehend aus 75 bis 93 Mol-% 2-Isopropyl-$\Delta$2-oxazolin oder 2-n-Propyl-$\Delta$2-oxazolin und 25 bis 7 Mol-% 2-Methyl-$\Delta$2-oxazolin, beide mit einer Viskositätszahl von 35 bis 70 (ml/g), gemessen bei 25°C in einem Isopropanol/Wasser-Gemisch (50 Volumenprozent Isopropanol) in einer Konzentration von 0,5% (Gewicht/Volumen der Lösung), als Cosuspensionsstabilisator polymerisiert.

In einer bevorzugten Ausführungsform des Verfahrens wird als Suspensionsstabilisator 0,02 bis 0,2 Gewichtsprozent, bezogen auf das Monomere, eines teilhydrolysierten Polyvinylacetats mit einem Hydrolysegrad von 70 bis 90 Mol-% und einer Viskosität von 2 bis 50 mPa s, gemessen in 4gewichtsprozentiger wäßriger Lösung bei 20°C, eingesetzt.

In einer weiteren bevorzugten Ausführungsform des Verfahrens wird als Suspensionsstabilisator 0,02 bis 0,3 Gewichtsprozent, bezogen auf das Monomere, an Methyl-, Methylhydroxiethyl- oder Methylhydroxipropylcellulosen, mit einer Viskosität von 12 bis 120 mPa s, gemessen in 2gewichtsprozentiger wäßriger Lösung bei 20°C, eingesetzt.

In einer weiteren besonders empfehlenswerten Ausführungsform des Verfahrens werden als Cosuspensionsstabilisatoren Copolymere, bestehend aus 87 bis 95 Mol-% 2-n-Propyl-$\Delta$2-oxazolin und 13 bis 5 Mol-% 2-Ethyl-$\Delta$2-oxazolin und/oder Copolymere bestehend aus 77 bis 95 Mol-% 2-n-Propyl-$\Delta$2-oxazolin und 23 bis 5 Mol-% 2-Methyl-$\Delta$2-oxazolin, eingesetzt.

Die erfindungsgemäß einzusetzenden 2-Propyl-$\Delta$2-oxazolin-Copolymeren haben eine Viskositätszahl von 35 bis 70 (ml/g), vorzugsweise 40 bis 65 (ml/g), gemessen bei 25°C in einem Isopropanol/Wasser-Gemisch (50 Volumenprozent Isopropanol), in einer Konzentration von 0,5% (Gewicht/Volumen der Lösung). Besonders günstig sind Copolymere aus 75 bis 85 Mol-% 2-Isopropyl-$\Delta$2-oxazolin und 25 bis 15 Mol-% 2-Methyl-$\Delta$2-oxazolin. Besonders günstig sind außerdem Copolymere aus 77 bis 87 Mol-% 2-n-Propyl-$\Delta$2-oxazolin und 23 bis 13 Mol-% 2-Methyl-$\Delta$2-oxazolin.

Aus der DE-A-2 227 887 ist es zwar bereits bekannt, daß Copolymere aus Methyl- und Propyl-$\Delta$2-oxazolinen als Suspensionsstabilisatoren bei der Polymerisation von Vinylchlorid angewendet werden können; es werden laut Seite 3, 3. Absatz, als Suspensionsstabilisatoren aber solche Copolymere eingesetzt, die zu 90 bis 50 Mol-% aus Methyl-$\Delta$2-oxazolineinheiten und zu 10 bis 50 Mol-% aus Propyl-$\Delta$2-oxazolineinheiten bestehen.

Erfindungsgemäß werden als Suspensionsstabilisatoren jedoch solche Copolymeren angewendet, die zu 75 bis 93 (87 bis 95) Mol-% aus 2-Propyl-$\Delta$2-oxazolin und nur zu 25 bis 7 (23 bis 5) Mol-% aus 2-Methyl-$\Delta$2-oxazolin bestehen.

Das heißt, in der Entgegenhaltung überwiegen die Methyloxazolinanteile, während erfindungsge-

0 048 842

mäß die Methyloxazolinanteile nur zu einem sehr geringen Prozentsatz anwesend sind. Wie ersichtlich, handelt es sich deshalb bei den erfindungsgemäß einzusetzenden Suspensionsstabilisatoren um einen völlig anderen Typ als in der Entgegenhaltung, die bei der Herstellung von Polyvinylchlorid zu völlig anderen Produkten führen. Erfindungsgemäß wird nämlich ein Polyvinylchlorid hergestellt, welches für die Weichverarbeitung geeignet ist (vgl. Seite 1, Absatz 2) und daher hohe Porosität und hohe Weichmacheraufnahme bei geringer Stippigkeit zeigt.

Gemäß der Entgegenhaltung werden aber Polyvinylchlorid-Lackrohstoffe hergestellt, und dafür muß das Polyvinylchlorid-Korn völlig kompakt und unporös sein.

Es ist weiterhin zu bedenken, daß gemäß der DE-A-2 227 887 die (völlig andersartig aufgebauten) Polyoxazoline als Haupt-Suspensionsmittel eingesetzt werden; erfindungsgemäß werden die Polyoxazoline jedoch als Cosuspensionsmittel angewendet. Dies ergibt eine weitere nicht unbeträchtliche Distanzierung von der Entgegenhaltung.

Die Copolymeren können gemäß DE-PS 1 263 300 hergestellt werden oder nach der Verfahrensweise, welche unter dem Beispiel 1a beschrieben wird (deutsche Patentanmeldung P 3 036 119.4).

Brauchbare Schutzkolloide sind die üblicherweise eingesetzten wasserlöslichen, hochmolekularen Verbindungen, wie teilverseifte Polyvinylacetate und Celluloseether. Die teilhydrolysierten Polyvinylacetate können einen Hydrolysegrad bis zu 90 Mol-% haben. Als Celluloseether können Methyl-, Methylhydroxiethyl-, Methylhydroxipropyl-, Hydroxipropylcellulosen und auch verschiedene Kombinationen der genannten Stoffe eingesetzt werden. Die Schutzkolloide werden gewöhnlich im Bereich von 0,02 bis 0,3 Gewichtsprozent, bezogen auf das zu polymerisierende Monomere, eingesetzt.

Die Menge der zusammen mit den Schutzkolloiden einzusetzenden Oxazolin-Copolymeren hängt von der Art und Menge des Schutzkolloids ab und variiert im Bereich von 0,5 bis 0,01 Gewichtsprozent, vorzugsweise 0,3 bis 0,02 Gewichtsprozent, bezogen auf das Gewicht des zu polymerisierenden Monomers.

Als monomerlösliche Initiatoren sind zu verwenden: Diacylperoxide wie zum Beispiel 2,4-Dichlorbenzoyl-, Dibenzoyl-, Dilauroylperoxid, Peroxydicarbonate wie zum Beispiel Diisopropyl-, Di-2-ethylhexyl-, Dicyclohexyl-, Dicetylperoxydicarbonat, Alkylperester wie zum Beispiel t-Butyl-perpivalat, t-Butyl-perbenzoat, Azoverbindungen wie zum Beispiel Azodiisobuttersäuredinitril und schließlich gemischte Anhydride organischer Sulfopersäuren und Carbonsäure, wie beispielsweise Acetylcyclohexylsulfonylperoxid. Die Initiatoren können allein oder in Mischung eingesetzt werden, wobei man üblicherweise Mengen von 0,01 bis 0,3 Gewichtsprozent, vorzugsweise 0,01 bis 0,15 Gewichtsprozent, bezogen auf das Monomere, einsetzt.

Die Polymerisation kann bei üblichen Temperaturen im Bereich von 30 bis 75° C, vorzugsweise 40 bis 70° C, durchgeführt werden.

Der Einsatz von bis zu 20 Gewichtsprozent an Comonomeren zur Herstellung von Mischpolymerisaten ist möglich. Beispiele brauchbarer Comonomerer sind Vinylester, wie Vinylacetat, Vinylidenhalogenide, wie Vinylidenchlorid, Acrylsäure- und Methacrylsäurealkylester mit 1 bis 18 Kohlenstoffatomen im Alkylrest, wie die Methyl-, n-Butyl- und Laurylester und schließlich Monoolefine wie Ethylen oder Propylen.

Zur weiteren Erläuterung der Erfindung dienen die folgenden Beispiele (die angegebenen Teile sind Gewichtsteile). Die Vergleichsbeispiele werden mit großen Buchstaben gekennzeichnet.

Beispiel 1a

Herstellung des 2-Isopropyl-$\Delta$2-oxazolin/2-Ethyl-$\Delta$2-oxazolin-Copolymers

In einen mit einem Wendelrührer und einem Rückflußkühler ausgestatteten Glasautoklaven mit Heizmantel wurden bei Raumtemperatur und unter Stickstoff folgende Produkte gegeben:

550 ml 2-Isopropyl-$\Delta$2-oxazolin,
50 ml 2-Ethyl-$\Delta$2-oxazolin (Molverhältnis: 90/10) und
200 ml p-Xylol.

Unter Rühren wurden anschließend 25,5 ml einer 0,1molaren Lösung von p-Toluolsulfonsäuremethylester in p-Xylol zugegeben.

Der Druck wurde auf einen Gesamtdruck von 1,5 bar und der am Heizmantel angeschlossene Thermostat auf 150° C eingestellt. Innerhalb einer Aufheizzeit von 10 Minuten erreichte die Innentemperatur des Reaktors 150° C. Nach etwa 60 min war die Polymerisation beendet.

Nach Druckausgleich wurden 700 ml Isopropylalkohol zugegeben. Anschließend wurde die homogene, hochviskose Lösung bei 85° C in eine Aufarbeitungsapparatur, in der 3 Liter Hexan vorgelegt wurden, gedrückt. Nach $^1/_2$stündigem Rühren wurde noch 1 Liter Hexan zugegeben. Die Produktphase wurde von der Lösungsmittelphase getrennt. Das Produkt wurde in Methylenchlorid gelöst, durch Zugabe von Hexan erneut gefällt und bei 60° C/2 mbar getrocknet. Das so erhaltene Produkt wurde als Cosuspensionsstabilisator in Kombination mit Polyvinylalkohol zur Suspensionspolymerisation von

3

Vinylchlorid nach Beispiel 1b eingesetzt. Die Viskositätszahl dieses Produktes betrug 40 (ml/g), gemessen bei 25°C in einem Isopropanol/Wasser-Gemisch (50 Volumenprozent Isopropanol), in einer Konzentration von 0,5% (Gewicht/Volumen der Lösung).

### Beispiel 1b

In einen 40 Liter-Polymerisationsautoklaven aus rostfreiem Stahl wurden folgende Bestandteile gegeben: 20 000 Teile Wasser, 12 Teile eines teilhydrolysierten Polyvinylacetats mit 71,0±1,5 Mol-% Hydrolysegrad und einer Viskosität von 5,4±0,4 mPa · s (gemessen in einer 4gewichtsprozentigen wäßrigen Lösung bei 20°C), 20 Teile des nach Beispiel 1a hergestellten 2-Isopropyl-$\Delta$2-oxazolin/2-Ethyl-$\Delta$2-oxazolin-Copolymers, 9,35 Teile Di-cetyl-peroxydicarbonat, 11 Teile Dilauroylperoxid und 4 Teile Ammoniumhydrogencarbonat. Der Autoklav wurde geschlossen, mit Stickstoff gespült und evakuiert. Dann wurden 10 000 Teile Vinylchlorid zugegeben. Danach wurde 6 Stunden bei einer Temperatur von 54°C bis zu einem Druck von 5 bar polymerisiert. Das Produkt wurde anschließend vom größten Teil des Suspensionswassers getrennt und bei 50°C in einem Wirbelbetttrockner getrocknet.

Wie aus der Tabelle 1 zu entnehmen ist, fällt ein Polyvinylchloridharz mit hoher Porosität, sehr niedriger Stippigkeit und guten spezifischen Durchgangswiderstandswerten an.

Zu einem ähnlich guten Ergebnis gelangt man, wenn man anstelle des teilhdydrolysierten Polyvinylacetats eine Methylhydroxipropylcellulose mit einer Viskosität von 15 mPa · s, gemessen in 2gewichtsprozentiger wäßriger Lösung bei 20°C, einsetzt.

Zu einem ähnlich guten Ergebnis gelangt man auch, wenn man anstelle des 2-Isopropyl-$\Delta$2-oxazolin/2-Ethyl-$\Delta$2-oxazolin-Copolymers ein analog Beispiel 1a hergestelltes 2-n-Propyl-$\Delta$2-oxazolin/2-Ethyl-$\Delta$2-oxazolin-Copolymer einsetzt.

### Beispiel A

Es wurde wie in Beispiel 1b verfahren, jedoch wurde anstelle des 2-Isopropyl-$\Delta$2-oxazolin/2-Ethyl-$\Delta$2-oxazolin-Copolymers die gleiche Menge an Sorbitanmonolaurat (gemäß DE-OS 2 208 796) eingesetzt. Die Produkteigenschaften sind aus Tabelle 1 zu entnehmen. Das so hergestellte Polyvinylchlorid wies eine um ein Mehrfaches höhere Stippigkeit und eine deutlich geringere Porosität auf als das erfindungsgemäß nach Beispiel 1b hergestellte Produkt. Außerdem sind die spezifischen Durchgangswiderstandswerte unbefriedigend.

### Beispiel 2a

#### Herstellung des 2-Isopropyl-$\Delta$2-oxazolin/2-Methyl-$\Delta$2-oxazolin-Copolymers

Es wurde ähnlich wie in Beispiel 1a verfahren, jedoch wurden anstelle von 550 ml 500 ml 2-Isopropyl-$\Delta$2-oxazolin und anstelle von 50 ml 2-Ethyl-$\Delta$2-oxazolin 100 ml 2-Methyl-$\Delta$2-oxazolin eingesetzt (Molverhältnis: 78/22). Die Viskositätszahl des Produktes betrug 52 (ml/g), gemessen bei 25°C in einem Isopropanol/Wasser-Gemisch (50 Volumenprozent Isopropanol) in einer Konzentration von 0,5% (Gewicht/Volumen der Lösung).

### Beispiel 2b

Zur Suspensionspolymerisation von Vinylchlorid wurde wie in Beispiel 1b verfahren, jedoch wurden als Suspensionsstabilisator 5 Teile eines teilhydrolysierten Polyvinylacetats mit 71,0±1,5 Mol-% Hydrolysegrad und einer Viskosität von 5,4±0,4 mPa · s (gemessen in einer 4gewichtsprozentigen wäßrigen Lösung bei 20°C) und als Cosuspensionsstabilisator 15 Teile des 2-Isopropyl-$\Delta$2-oxazolin/2-Methyl-$\Delta$2-oxazolin-Copolymers, hergestellt nach Beispiel 2a, eingesetzt.

Wie aus Tabelle 1 zu entnehmen ist, besitzt das so hergestellte Polyvinylchlorid eine sehr hohe Porosität und geringe Stippigkeit.

Zu einem ähnlich guten Ergebnis gelangt man, wenn man anstelle des 2-Isopropyl-$\Delta$2-oxazolin/2-Methyl-$\Delta$2-oxazolin-Copolymers ein analog Beispiel 2a hergestelltes 2-n-Propyl-$\Delta$2-oxazolin/2-Methyl-$\Delta$2-oxazolin-Copolymer einsetzt.

### Beispiel B

Es wurde wie in Beispiel 2b verfahren, jedoch wurde anstelle des erfindungsgemäß eingesetzten

4

2-Isopropyl-Δ2-oxazolin/2-Methyl-Δ2-oxazolin-Copolymers die gleiche Menge an Sorbitanmonolaurat eingesetzt. Das so hergestellte Polyvinylchloridharz ist extrem grob und daher für die übliche Weich-Polyvinylchlorid-Verarbeitung unbrauchbar. Die Produkteigenschaften sind in Tabelle 1 zusammengefaßt.

## Beispiel C

Es wurde wie in Beispiel 2b verfahren, jedoch wurden als Suspensionsstabilisator 20 Teile eines teilhydrolysierten Polyvinylacetats mit 71,0±1,5 Mol-% Hydrolysegrad und einer Viskosität von 5,4±0,5 mPa · s (gemessen in einer 4gewichtsprozentigen wäßrigen Lösung bei 20°C) eingesetzt. Abweichend von Beispiel 2b wurde außerdem der Cosuspensionsstabilisator weggelassen.

Wie aus Tabelle 1 zu entnehmen ist, weist das so hergestellte Polyvinylchloridharz eine geringe Porosität und eine sehr hohe Stippigkeit auf.

## Beispiel 3

Es wurde wie in Beispiel 1b verfahren, jedoch wurden als Suspensionsstabilisator nur 7,5 Teile eines teilhydrolysierten Polyvinylacetats mit 71,0±1,5 Mol-% Hydrolysegrad und einer Viskosität von 5,4±0,4 mPa · s (gemessen in einer 4gewichtsprozentigen wäßrigen Lösung bei 20°C) und als Cosuspensionsstabilisator 10 Teile des nach Beispiel 2a hergestellten 2-Isopropyl-Δ2-oxazolin/2-Methyl-Δ2-oxazolin-Copolymers eingesetzt.

Wie aus Tabelle 1 zu entnehmen ist, besitzt das so hergestellte Polyvinylchloridharz eine hohe Porosität, eine geringe Stippigkeit und gute spezifische Durchgangswiderstandswerte.

Zu einem ähnlich guten Ergebnis gelangt man, wenn man anstelle des 2-Isopropyl-Δ2-oxazolin/2-Methyl-Δ2-oxazolin-Copolymers ein analog Beispiel 2a hergestelltes 2-n-Propyl-Δ2-oxazolin/2-Methyl-Δ2-oxazolin-Copolymer einsetzt.

## Beispiel D

Es wurde wie in Beispiel 3 verfahren, jedoch wurden als Suspensionsstabilisator 12 Teile eines teilhydrolysierten Polyvinylacetats mit 71,0±1,5 Mol-% Hydrolysegrad und einer Viskosität von 5,4±0,4 mPa · s (gemessen in 4gewichtsprozentiger wäßriger Lösung bei 20°C) und anstelle des erfindungsgemäß zu verwendenden 2-Isopropyl-Δ2-oxazolin/2-Methyl-Δ2-oxazolin-Copolymers die gleiche Menge Sorbitanmonolaurat eingesetzt.

Wie aus Tabelle 1 zu entnehmen ist, besitzt das so hergestellte Polyvinylchlorid eine deutlich geringere Porosität und eine um ein Mehrfaches höhere Stippigkeit als das erfindungsgemäß nach Beispiel 3 hergestellte Polyvinylchloridharz.

Tabelle 1

| Beispiele | Korngrößenverteilung Siebrückstand in Gew.-% bei folgenden Maschenweiten | | | | Schütt-dichte[1] (g/l) | Weichmacher-aufnahme[3] $\left(\dfrac{\text{g DOP}^{[2]}}{100\,\text{g PVC}}\right)$ | Zeit zur Weichmacher-aufnahme[4] (min) | Bewertung der Fisch-augen[5] | Spezif. Durchgangs-widerstand $(\Omega \cdot \text{cm})^{[6]}$ bei | |
|---|---|---|---|---|---|---|---|---|---|---|
| | 63 μm | 100 μm | 160 μm | 200 μm | | | | | 23°C | 70°C |
| 1b | 99,9 | 78,0 | 6,9 | 0,4 | 457 | 40,1 | 6,1 | 3,1 | $119 \cdot 10^{13}$ | $8,4 \cdot 10^{11}$ |
| A | 99,5 | 81,6 | 6,0 | 0,4 | 471 | 31,6 | 6,5 | 4,6 | $60 \cdot 10^{13}$ | $3,2 \cdot 10^{11}$ |
| 2b | 99,2 | 69,0 | 1,5 | 0,4 | 461 | 37,9 | 7,2 | 4,1 | — | — |
| B | 99,4 | 94,7 | 80,2 | 77,6 | 513 | 29,7 | als Weich-PVC nicht zu verarbeiten | | | |
| C | 97,2 | 60,1 | 1,2 | | 459 | 27,6 | 7,5 | 5,6 | — | — |
| 3 | 99,5 | 72,7 | 0,8 | | 450 | 37,5 | 7,0 | 4,3 | $129 \cdot 10^{13}$ | $10,9 \cdot 10^{11}$ |
| D | 99,5 | 78,6 | 5,2 | 0,7 | 486 | 31,7 | 7,7 | 6,0 | $75 \cdot 10^{13}$ | $4,5 \cdot 10^{11}$ |

[1] Nach DIN 53 468.
[2] DOP = Di-2-Ethylhexylphthalat.
[3] Nach DIN 53 417/1 (Zentrifugierverfahren) — ist ein Maß für die Kornporosität.
[4] Zeit bis zum Trockenpunkt einer PVC: Di-2-Ethylhexylphthalat = 70 : 30-Mischung, gemessen im Brabender-Planetenmischer bei 85° C.
[5] Prüfmethode mit einem hochviskosen polymeren Adipinsäureester als Weichmacher. Vergleich mit Standardproben, wobei 6 eine extrem hohe Anzahl, 3,5 eine mittlere Anzahl und 1 eine extrem niedrige Anzahl Fischaugen bedeuten. Die Zwischenwerte sind entsprechende Zwischenabstufungen. Die angegebenen Werte sind Mittelwerte aus mehreren Beurteilungen von Blasfolien, die bei drei verschiedenen Schneckendrehzahlen extrudiert wurden. Prüfrezeptur: 70 Teile PVC, 30 Teile Witamol 621, 4 Teile Nuostab V 1204, 0,2 Teile LOXIOL G 40.
[6] Nach DIN 53 482.

**Patentansprüche**

1. Verfahren zur Herstellung von Vinylchloridharzen durch Polymerisation von Vinylchlorid allein oder zusammen mit bis zu 20 Gewichtsprogramm an anderen polymerisierbaren ungesättigten Monomeren in wäßriger Suspension in Gegenwart von monomerlöslichen Radikalkatalysatoren, von teilhydrolysierten Polyvinylacetaten und/oder Celluloseethern als Suspensionsstabilisatoren, dadurch gekennzeichnet, daß man in Gegenwart von 0,02 bis 0,3 Gewichtsprozent, bezogen auf das Monomere, eines Copolymeren, bestehend aus 75 bis 93 Mol-% 2-Isopropyl-$\Delta$2-oxazolin oder 2-n-Propyl-$\Delta$2-oxazolin und 25 bis 7 Mol-% 2-Ethyl-$\Delta$2-oxazolin, und/oder eines Copolymeren, bestehend aus 75 bis 93 Mol-% 2-Isopropyl-$\Delta$2-oxazolin oder 2-n-Propyl-$\Delta$2-oxazolin und 25 bis 7 Mol-% 2-Methyl-$\Delta$2-oxazolin, beide mit einer Viskositätszahl von 35 bis 70 (ml/g), gemessen bei 25°C in einem Isopropanol/Wasser-Gemisch (50 Volumenprozent Isopropanol) in einer Konzentration von 0,5% (Gewicht/Volumen der Lösung), als Cosuspensionsstabilisator polymerisiert.

2. Verfahren nach Anspruch 1, dadurch gekennzeichnet, daß als Suspensionsstabilisator 0,02 bis 0,2 Gewichtsprozent, bezogen auf das Monomere, eines teilhydrolysierten Polyvinylacetats mit einem Hydrolysegrad von 70 bis 90 Mol-% und einer Viskosität von 2 bis 50 mPa · s, gemessen in 4gewichtsprozentiger wäßriger Lösung bei 20°C, eingesetzt wird.

3. Verfahren nach Anspruch 1, dadurch gekennzeichnet, daß als Suspensionsstabilisator 0,02 bis 0,3 Gewichtsprozent, bezogen auf das Monmere, Methyl-, Methylhydroxiethyl- oder Methylhydroxipropylcellulosen mit einer Viskosität von 12 bis 120 mPa · s, gemessen in 2gewichtsprozentiger wäßriger Lösung bei 20°C, eingesetzt wird.

4. Verfahren zur Herstellung von Vinylchloridharzen durch Polymerisation von Vinylchlorid allein oder zusammen mit bis zu 20 Gewichtsprozent an anderen polymerisierbaren ungesättigten Monomeren in wäßriger Suspension in Gegenwart von monomerlöslichen Radikalkatalysatoren, von teilhydrolysierten Polyvinylacetaten und/oder Celluloseethern als Suspensionsstabilisatoren, dadurch gekennzeichnet, daß man in Gegwenwart von 0,02 bis 0,3 Gewichtsprozent, bezogen auf das Monomere, eines Copolymeren, bestehend aus 87 bis 95 Mol-% 2-n-Propyl-$\Delta$2-oxazolin und 13 bis 5 Mol-% 2-Ethyl-$\Delta$2-oxazolin, und/oder eines Copolymeren, bestehend aus 77 bis 95 Mol-% 2-n-Propyl-$\Delta$2-oxazolin und 23 bis 5 Mol-% 2-Methyl-$\Delta$2-oxazolin, mit einer Viskositätszahl von 35 bis 70 (ml/g), gemessen bei 25°C in einem Isopropanol/Wasser-Gemisch (50 Volumenprozent Isopropanol) in einer Konzentration von 0,5% (Gewicht/Volumen der Lösung), als Cosuspensionsstabilisator polymerisiert.

5. Verfahren nach den Ansprüchen 1 bis 4, dadurch gekennzeichnet, daß als Cosuspensionsstabilisator 2-Propyl-$\Delta$2-oxazolin-Copolymere mit einer Viskositätszahl von 40 bis 65 (ml/g), gemessen bei 25°C in einem Isopropanol/Wasser-Gemisch (50 Volumenprozent Isopropanol) in einer Konzentration von 0,5% (Gewicht/Volumen der Lösung), eingesetzt werden.

**Claims**

1. A process for the production of a vinyl chloride resin by polymerisation of vinyl chloride alone or with up to 20 wt% of one or more other polymerisable unsaturated monomer in aqueous suspension in the presence of a radical catalyst soluble in the monomer(s) and of a suspension stabiliser selected from partially hydrolysed polyvinylacetates and cellulose ethers, characterised in that the polymerisation is carried out in the presence as a suspension costabiliser of 0.02 to 0.3 wt%, based on the monomer(s), of a copolymer formed of 75 to 93 mol-% 2-isopropyl-$\Delta$2-oxazoline or 2-n-propyl-$\Delta$2-oxazoline and 25 to 7 mol-% 2-ethyl-$\Delta$2-oxazoline, and/or of a copolymer formed of 75 to 93 mol-% 2-isopropyl-$\Delta$2-oxazoline or 2-n-propyl-$\Delta$2-oxazoline and 25 to 7 mol-% 2-methyl-$\Delta$2-oxazoline, each of said copolymers having a viscosity number of 35 to 70 (ml/g) measured at 25°C in an isopropanol/water mixture (50 vol-% isopropanol) at a concentration of 0.5% (weight/volume of solution).

2. A process according to claim 1, characterised in that 0.02 to 0.2 wt%, based on the monomer(s), of a partially hydrolysed polyvinylacetate having a degree of hydrolysis of 70 to 90 mol-% and a viscosity of 2 to 50 mPa · s, measured in 4 wt% aqueous solution at 20°C, is introduced as suspension stabiliser.

3. A process according to claim 1, characterised in that 0.02 to 0.3 wt%, based on the monomer(s), of methyl-, methylhydroxyethyl- or methylhydroxypropyl-cellulose having a viscosity of 12 to 120 mPa · s, measured in 2 wt% aqueous solution at 20°C, is introduced as suspension stabiliser.

4. A process for the production of a vinyl chloride resin by polymerisation of vinyl chloride alone or with up to 20 wt% of one or more other polymerisable unsaturated monomers in aqueous suspension in the presence of a radical catalyst soluble in the monomer(s) and of a suspension stabiliser selected from partially hydrolysed polyvinylacetates and cellulose ethers, characterised in that the polymerisation is carried out in the presence as a suspension costabiliser of 0.02 to 0.3 wt%, based on the monomer(s), of a copolymer formed of 87 to 95 mol-% 2-n-propyl-$\Delta$2-oxazoline and 13 to 5 mol-% 2-ethyl-$\Delta$2-oxazoline and/or of a copolymer formed of 77 to 95 mol-% 2-n-propyl-$\Delta$2-oxazoline and 23 to 5 mol-% 2-methyl-$\Delta$2-oxazoline, said copolymers having a viscosity number of 35 to 70 (ml/g) measured at 25°C in an isopropanol/water mixture (50 vol-% isopropanol) at a concentration of 0.5% (weight/volume of solution).

5. A process according to any of claims 1 to 4, characterised in that a 2-propyl-$\Delta$2-oxazoline copolymer having a viscosity number of 40 to 65 (ml/g), measured at 25°C in an isopropanol/water mixture (50 vol-% isopropanol) at a concentration of 0.5% (weight/volume of solution), is introduced as suspension costabiliser.

## Revendications

1. Procédé de préparation de résine de chlorure de vinyle par polymérisation de chlorure de vinyle, seul ou avec 20% en poids au maximum d'autres monomères insaturés polymérisables, en suspension aqueuse, en présence de catalyseurs à radicaux solubles dans le monomère, de polyacétates de vinyle partiellement hydrolysés et/ou d'éthers de cellulose comme stabilisateurs de suspension, caractérisé par le fait que l'on polymérise en présence de 0,02 à 0,3% en poids, relativement au monomère, d'un copolymère formé de 75 à 93 mol-% de 2-isopropyl-$\Delta$2-oxazoline ou de 2-n-propyl-$\Delta$2-oxazoline et 25 à 7 mol-% de 2-éthyl-$\Delta$2-oxazoline, et/ou d'un copolymère formé de 75 à 93 mol-% de 2-isopropyl-$\Delta$2-oxazoline ou de 2-n-propyl-$\Delta$2-oxazoline et de 25 à 7 mol-% de 2-méthyl-$\Delta$2-oxazoline, ayant tous deux un indice de viscosité de 35 à 70 ml/g, mesuré à 25°C dans un mélange isopropanol/eau (50% en volume d'isopropanol), à une concentration de 0,5% (poids/volume de la solution), comme costabilisateur de suspension.

2. Procédé selon la revendication 1, caractérisé par le fait que l'on utilise comme stabilisateur de suspension, de 0,02 à 0,2% en poids, relativement au monomère, d'un polyacétate de vinyle partiellement hydrolysé ayant un degré d'hydrolyse de 70 à 90 mol-% et une viscosité de 2 à 50 mPa · s, mesurée en solution aqueuse à 4% en poids à 20°C.

3. Procédé selon la revendication 1, caractérisé par le fait que l'on utilise comme stabilisateur de suspension de 0,02 à 0,3% en poids, relativement au monomère, de méthyl-, de méthyl-hydroxy-éthyl- ou de méthylhydroxypropyl celluloses ayant une viscosité de 12 à 120 mPa · s, mesurée en solution aqueuse à 2% en poids à 20°C.

4. Procédé de préparation de résines de chlorure de vinyle par polymérisation de chlorure de vinyle, seul ou avec 20% en poids au maximum d'autres monomères insaturés polymérisables, en suspension aqueuse, en présence de catalyseurs à radicaux solubles dans le monomère, de polyacétates de vinyle partiellement hydrolysés et/ou d'éthers de cellulose comme stabilisateurs de suspension, caractérisé par le fait que l'on polymérise en présence de 0,02 à 0,3% en poids, relativement au monomère, d'un copolymère formé de 87 à 95 mol-% de 2-n-propyl-$\Delta$2-oxazoline et de 13 à 5 mol-% de 2-éthyl-$\Delta$2-oxazoline et/ou d'un copolymère formé de 77 à 95 mol-% de 2-n-propyl-$\Delta$2-oxazoline et de 23 à 5 mol-% de 2-méthyl-$\Delta$2-oxazoline, ayant un indice de viscosité de 35 à 70 ml/g, mesurée à 25°C dans un mélange d'isopropanol et d'eau (50% en volume d'isopropanol), à une concentration de 0,5% (poids/volume de la solution), comme co-stabilisateur de la suspension.

5. Procédé selon les revendications 1 à 4, caractérisé par le fait que l'on utilise comme co-stabilisateur de suspension des copolymères de 2-propyl-$\Delta$2-oxazoline ayant un indice de viscosité de 40 à 65 ml/g, mesuré à 25°C dans un mélange isopropanol et d'eau (50% en volume d'isopropanol), à une concentration de 0,5% (poids/volume de la solution).